# EUROPÄISCHE PATENTANMELDUNG

(11) **EP 3 321 050 A2**
(43) Veröffentlichungstag der Anmeldung: **16.05.2018**
(21) Anmeldenummer: 17179842.4
(22) Anmeldetag: 05.07.2017
(51) Int. Cl.: B28B 1/00, B29C 64/20, B29C 64/25, B22F 3/105

(54) **VORRICHTUNG ZUR ADDITIVEN HERSTELLUNG DREIDIMENSIONALER OBJEKTE**

(30) Priorität: 14.11.2016 DE 102016121782
(71) Anmelder: CL Schutzrechtsverwaltungs GmbH, 96215 Lichtenfels (DE)
(72) Erfinder: Stammberger, Jens, 96472 Rödental (DE); Winiarski, Daniel, 96231 Bad Staffelstein (DE)
(74) Vertreter: Kohl, Fabian Hanno

(57) **Zusammenfassung**

Vorrichtung (1) zur additiven Herstellung dreidimensionaler Objekte (2) durch sukzessives schichtweises selektives Belichten und damit einhergehendes Verfestigen von Baumaterialschichten aus einem vermittels eines Energiestrahls (6) verfestigbaren Baumaterial (3), umfassend eine mehrere Gehäusewandungen (4a - 4f) umfassende äußere Gehäusekonstruktion (4), wobei innerhalb der Gehäusekonstruktion (4) mehrere Funktionskomponenten der Vorrichtung (1) angeordnet oder ausgebildet sind, wobei wenigstens eine Gehäusewandung (4a - 4f) als ein Blechteil ausgebildet ist oder wenigstens ein Blechteil umfasst.

## Beschreibung

Die Erfindung betrifft eine Vorrichtung zur additiven Herstellung dreidimensionaler Objekte durch sukzessives schichtweises selektives Belichten und damit einhergehendes Verfestigen von Baumaterialschichten aus einem vermittels eines Energiestrahls verfestigbaren Baumaterial, umfassend eine mehrere Gehäusewandungen umfassende äußere Gehäusekonstruktion, wobei innerhalb der Gehäusekonstruktion mehrere Funktionskomponenten der Vorrichtung angeordnet oder ausgebildet sind.

Entsprechende Vorrichtungen zur additiven Herstellung dreidimensionaler Objekte sind, z. B. in Form von Vorrichtungen zur Durchführung selektiver Lasersinter- bzw. selektiver Laserschmelzverfahren, an und für sich bekannt. Entsprechende Vorrichtungen umfassen eine mehrere Gehäusewandungen umfassende äußere Gehäusekonstruktion, innerhalb welcher mehrere Funktionskomponenten der Vorrichtung, d. h. z. B. eine Belichtungseinrichtung, eine Beschichtungseinrichtung, etc., angeordnet oder ausgebildet sind.

Bis dato ist es üblich, dass die Gehäusekonstruktion als eine mehrere profilartige bzw. - förmige Rahmenkonstruktionselemente umfassende Rahmenkonstruktion gebildet ist, an welcher gesonderte Verkleidungselemente befestigt sind. Die die Rahmenkonstruktion bildenden einzelnen Rahmenkonstruktionselemente werden in einer bestimmten räumlichen Anordnung aneinander befestigt. Insgesamt ist der Aufbau einer entsprechenden Rahmenkonstruktion sowohl in konstruktiver als auch in fertigungstechnischer Hinsicht vergleichsweise aufwändig.

Der Erfindung liegt die Aufgabe zugrunde, eine, insbesondere im Hinblick auf eine in konstruktiver als auch in fertigungstechnischer Hinsicht vereinfacht aufgebauten Gehäusekonstruktion, verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial eingerichtet. Bei dem Baumaterial kann es sich insbesondere um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Vorrichtung umfasst die zur Durchführung additiver Bauvorgänge typischerweise erforderlichen Funktionskomponenten. Hierzu zählen insbesondere eine Beschichtungseinrichtung, welche zur Ausbildung selektiv zu verfestigender Baumaterialschichten (in der Bauebene der Vorrichtung) eingerichtet ist, und eine Belichtungseinrichtung, welche zur selektiven Belichtung selektiv zu verfestigender Baumaterialschichten (in der Bauebene der Vorrichtung) eingerichtet ist. Die Beschichtungseinrichtung kann mehrere Bestandteile umfassen, d. h. z. B. ein ein, insbesondere klingenförmiges, Beschichtungswerkzeug umfassendes Beschichtungselement sowie eine Führungseinrichtung zur Führung des Beschichtungselements entlang einer definierten Bewegungsbahn. Auch die Belichtungseinrichtung kann mehrere Bestandteile umfassen, d. h. z. B. eine Strahlerzeugungseinrichtung zur Erzeugung eines Energie- bzw. Laserstrahls, eine Strahlablenkeinrichtung (Scannereinrichtung) zur Ablenkung eines von der Strahlerzeugungseinrichtung erzeugten Energie- bzw. Laserstrahls auf einen zu belichtenden Bereich einer selektiv zu verfestigenden Baumaterialschicht sowie diverse optische Elemente, wie z. B. Filterelemente, Objektivelemente, Linsenelemente, etc.

Die Vorrichtung umfasst eine äußere Gehäuse- bzw. Gestellkonstruktion ("Gehäusekonstruktion"). Die Gehäusekonstruktion bildet typischerweise eine (geschlossene) Gehäuse- bzw. Verkleidungskonstruktion der Vorrichtung. Die Gehäusekonstruktion definiert sonach (im Wesentlichen) die äußere Gestalt der Vorrichtung.

Die Gehäusekonstruktion umfasst mehrere Gehäusewandungen bzw. Gehäusewandungsabschnitte. Die Gehäusewandungen bzw. die Gehäusewandungsabschnitte begrenzen einen Gehäusekonstruktionsinnenraum. In dem Gehäusekonstruktionsinnenraum sind mehrere Funktionskomponenten der Vorrichtung, d. h. z. B. eine Prozesskammer, die, typischerweise in der Prozesskammer angeordnete, Beschichtungseinrichtung sowie die, typischerweise an der Prozesskammer angeordnete oder ausgebildete, Belichtungseinrichtung, angeordnet oder ausgebildet.

Entsprechende Gehäusewandungen können, insbesondere für das Beispiel einer (im Wesentlichen) quaderartigen bzw. -förmigen Gehäusekonstruktion, d. h. einer Gehäusekonstruktion mit einer (im Wesentlichen) viereckigen Grund- bzw. Querschnittsform, eine eine Vorderseite der Gehäusekonstruktion bildende Frontwandung, eine dieser gegenüber liegend angeordnete, eine Rückseite der Gehäusekonstruktion bildende Rückwandung, eine sich (recht)winklig zu diesen zwischen der Front- und der Rückwandung erstreckende erste Seitenwandung eine der ersten Seitenwandung gegenüber liegend angeordnete, sich (recht)winklig zu diesen zwischen der Front- und der Rückwandung erstreckende zweite Seitenwandung, eine Deckenwandung der Gehäusekonstruktion oder eine Bodenwandung der Gehäusekonstruktion bilden.

Wenigstens eine Gehäusewandung, d. h. gegebenenfalls alle Gehäusewandungen, ist bzw. sind durch Blechteile gebildet. Die Blechteile bilden gleichermaßen die (geschlossene) Gehäuse- bzw. Verkleidungskonstruktion der Vorrichtung. Die Gehäusekonstruktion der hierin beschriebenen Vorrichtung umfasst sonach keine mehrere aneinander befestigte profilartige Rahmenkonstruktionselemente umfassende Rahmenkonstruktion, an welcher gesonderte Verkleidungselemente befestigt sind, sondern besteht zumindest abschnittsweise, insbesondere vollständig, aus Blechteilen. Die Gehäusekonstruktion ist damit sowohl in konstruktiver als auch in fertigungstechnischer Hinsicht vereinfacht aufgebaut; es liegt eine verbesserte Vorrichtung vor.

Die Blechteile haben typischerweise eine flächige geometrisch-konstruktive Gestalt. Konkret können die Blechteile z. B. eine vier- bzw. rechteckige geometrisch-konstruktive flächige Gestalt aufweisen. Die Abmessungen der Blechteile sind typischerweise im Hinblick auf die Abmessungen der durch diese gebildeten Gehäusewandung(en) gewählt; typischerweise entsprechen die Abmessungen der Blechteile sonach den Abmessungen der durch diese jeweils gebildeten Gehäusewandungen.

Die strukturellen Eigenschaften der Blechteile erlauben eine tragende Funktion für die Gehäusekonstruktion. Es ist grundsätzlich nicht notwendig, weitere tragende Konstruktionselemente zur Ausbildung der Gehäusekonstruktion vorzusehen. Wie weiter unten beschrieben ist, kann es in Einzelfällen jedoch erforderlich sein, die Blechteile bzw. die Gehäusekonstruktion durch geeignete (mechanische) Verstärkungs- bzw. Versteifungselemente (mechanisch) zu verstärken bzw. zu versteifen.

Jeweilige Blechteile können z. B. aus einem Stahl- bzw. Edelstahlblech gebildet sein. Die Wandstärke (Dicke) eines jeweiligen Blechteils liegt typischerweise in einem Bereich zwischen 1 und 10 mm, insbesondere zwischen 2 und 6 mm. Selbstverständlich sind Abweichungen nach oben und unten möglich. Insbesondere ist es denkbar, dass ein Blechteil Blechteilabschnitte unterschiedlicher Stärke aufweist, was z. B. durch unterschiedliche Wandstärken oder einen mehrlagigen Aufbau eines Blechteils realisiert sein kann; derart können die strukturellen Eigenschaften des Blechteils gezielt beeinflusst werden.

Jeweilige Blechteile können eine oder mehrere Befestigungsschnittstelle(n) umfassen, welche zur Befestigung wenigstens einer Funktionskomponente an dem Blechteil eingerichtet sind. Jeweilige Befestigungsschnittstellen können eine form- und/oder kraft- und/oder stoffschlüssige Befestigung einer Funktionskomponente an dem Blechteil ermöglichen. Eine eine kraftschlüssige Befestigung der Funktionskomponente an einem Blechteil ermöglichende Befestigungsschnittstelle kann z. B. eine von einem Schraubenelement durchsetzbare Bohrung, insbesondere Gewindebohrung, sein oder eine solche umfassen. In Betracht kommende formschlüssige Befestigungsarten sind z. B. Klips- oder Rastbefestigungen, in Betracht kommende stoffschlüssige Befestigungsarten sind z. B. Klebe-, Löt- oder Schweißverbindungen.

Wenigstens zwei benachbart angeordnete Blechteile können unmittelbar form- und/oder kraft- und/oder stoffschlüssig aneinander befestigt sein. Die Befestigung jeweiliger Blechteile aneinander kann sonach über diverse form- und/oder kraft- und/oder stoffschlüssige Befestigungsarten erfolgen, welche eine lösbare (beschädigungs- bzw. zerstörungsfrei) oder eine (beschädigungs- bzw. zerstörungsfrei) unlösbare Befestigung jeweiliger Blechteile ermöglichen. Lediglich beispielhaft wird auf Niet-, Klemm-, Schraub- oder Steckbefestigungen als Beispiele für form- und/oder kraftschlüssige Befestigungsarten sowie auf Klebe-, Löt- oder Schweißbefestigungen als Beispiele für stoffschlüssige Befestigungsarten verwiesen.

Wenigstens zwei benachbart angeordnete Blechteile können auch mittelbar, d. h. unter Zwischenschaltung wenigstens eines Montagebauteils, form- und/oder kraft- und/oder stoffschlüssig aneinander befestigt sein. Die Blechteile können dabei jeweils in einer unveränderlichen lagefesten Anordnung und Ausrichtung an dem Montagebauteil und somit aneinander befestigt sein. Das Montagebauteil kann z. B. als Montageblock oder als Montagewinkel ausgebildet sein. Das Montagebauteil verfügt über enge Toleranzen, sodass über dieses aneinander befestigte Blechteile exakt positioniert sind.

Ein entsprechendes Montagebauteil kann wenigstens eine erste Befestigungsschnittstelle umfassen, welche zur Befestigung eines ersten Blechteils in einer unveränderlichen lagefesten Positionierung an dem Montagebauteil eingerichtet ist, und wenigstens eine zweite Befestigungsschnittstelle umfassen, welche zur Befestigung eines zweiten (bzw. weiteren) Blechteils in einer unveränderlichen lagefesten Positionierung an dem Montagebauteil eingerichtet ist. Jeweilige erste und zweite Befestigungsschnittstellen können eine form- und/oder kraft- und/oder stoffschlüssige Befestigung eines jeweiligen Blechteils an dem Montagebauteil ermöglichen. Es gelten die obigen Ausführungen zu form- und/oder kraft- und/oder stoffschlüssigen Befestigungsarten analog.

Bei einem Blechteil kann es sich um ein in fertigungstechnischer Hinsicht vergleichsweise einfach herstellbares Stanz-/Biegeteil handeln. Stanz-/Biegeteile lassen sich mit engen Toleranzen in verschiedenen geometrisch-konstruktiven Ausgestaltungen herstellen. Im Hinblick auf die Ausbildung eines Blechteils als Biegeteil gilt, dass das Blechteil zwei- oder dreidimensional gebogen sein kann.

Ein Blechteil kann mehrere, insbesondere (recht)winklig zueinander verlaufende, Blechteilabschnitte umfassen. Dabei kann ein erster Blechteilabschnitt wenigstens einen Teil einer ersten Gehäusewandung bzw. eine erste Gehäusewandung bilden und wenigstens ein weiterer Blechteilabschnitt wenigstens einen Teil wenigstens einer weiteren Gehäusewandung bzw. wenigstens eine weitere Gehäusewandung bilden. Bezogen auf eine (im Wesentlichen) quaderartige- bzw. förmige Gestalt der Gehäusekonstruktion kann ein jeweiliger Blechteilabschnitt wenigstens einen Teil der Front-, Seiten-, Rück-, Decken- oder Bodenwandung der Gehäusekonstruktion bilden. Jeweilige Blechteile können hierfür z. B. eine winklige Grundform, d. h. eine (im Wesentlichen) L- oder U-förmige Grundform aufweisen, wobei ein jeweiliger Blechteilabschnitt einen langen oder kurzen Schenkel des L- oder des U bildet. Insofern kann auch eine aus einem Blechteil gebildete Gehäusewandung mehrere, insbesondere winklig zueinander verlaufende, Gehäusewandungsabschnitte umfassen, wobei ein jeweiliger Gehäusewandungsabschnitt wenigstens einen Teil der Front-, Seiten- oder Rückwandung der Gehäusekonstruktion bildet.

Es wurde erwähnt, dass es erforderlich sein kann, die Blechteile bzw. die Gehäusekonstruktion durch geeignete (mechanische) Verstärkungs- bzw. Versteifungselemente (mechanisch) zu verstärken bzw. zu versteifen. Ein jeweiliges Blechteil kann demnach mit einer Verstärkungs- bzw. einer Versteifungsstruktur, insbesondere in Form einer wenigstens eine Sicke umfassenden Sickenstruktur, ausgebildet sein. Eine Verstärkungs- bzw. Versteifungsstruktur kann sonach im Allgemeinen durch in dem Blechteil selbst ausgebildete Konstruktionselemente zur Verstärkung bzw. Versteifung des Blechteils gebildet sein.

Eine Verstärkung bzw. Versteifung der Blechteile bzw. der Gehäusekonstruktion kann alternativ oder ergänzend auch durch einen der Gehäusekonstruktion zugeordneten Verstärkungsrahmen realisiert sein. Der Verstärkungsrahmen kann außerhalb und/oder innerhalb der Gehäusekonstruktion angeordnet oder ausgebildet sein, wobei der Verstärkungsrahmen zumindest abschnittsweise an wenigstens einem zu verstärkenden bzw. zu versteifenden Blechteil bzw. einer zu verstärkenden bzw. zu versteifenden Gehäusewandung anliegt, sodass er verstärkend bzw. versteifend auf dieses wirkt. Bei dem Verstärkungsrahmen kann es sich um ein(e) eigens der Verstärkung bzw. der Versteifung von Blechteilen bzw. der Gehäusekonstruktion dienende(s) Bauteil(gruppe) handeln.

Denkbar ist es jedoch auch, dass der oder ein Verstärkungsrahmen durch ein die Prozesskammer der Vorrichtung bodenseitig, seitlich oder deckenseitig begrenzendes, insbesondere plattenartiges, Prozesskammerwandungselement gebildet ist. Beispielsweise kann ein die Prozesskammer der Vorrichtung seitlich begrenzendes Prozesskammerwandungselement dazu dienen, die Gehäusekonstruktion zu verstärken bzw. zu versteifen. Dies kann dadurch realisiert sein, dass sich das Prozesskammerwandungselement zumindest abschnittsweise entlang einer Gehäusewandung erstreckt. Ein die Prozesskammer bodenseitig begrenzendes, eine Bauebene, in welcher die eigentliche schichtweises selektive Belichtung und damit einhergehende Verfestigung von Baumaterialschichten aus einem vermittels eines Energiestrahls verfestigbaren Baumaterial erfolgt, umfassendes Prozesskammerwandungselement kann dazu dienen, die Gehäusekonstruktion zu verstärken bzw. zu versteifen, indem es sich unmittelbar zwischen zwei einander gegenüber liegend angeordneten Gehäusewandungen erstreckend angeordnet bzw. ausgebildet ist. Analoges gilt für ein die Prozesskammer deckenseitig begrenzendes Prozesskammerwandungselement.

Ferner ist es denkbar, dass der oder ein Verstärkungsrahmen durch einen Abschnitt einer Schaltschrankkonstruktion, in welcher elektrische und/oder elektronische Komponenten der Vorrichtung angeordnet oder ausgebildet sind, gebildet ist. Konkret kann der Verstärkungsrahmen durch eine Gehäusekonstruktion des Schaltschranks gebildet sein, welche als (zusätzlicher) Verstärkungsrahmen der (zusätzlichen) Verstärkung bzw. Versteifung der Gehäusekonstruktion dient.

Weiter denkbar ist es, dass der oder ein Verstärkungsrahmen durch ein eine Benutzerarbeitsfläche, d. h. eine für einen Benutzer der Vorrichtung zugängliche Fläche, auf welche der Benutzer diverse Gegenstände, d. h. z. B. eine Tastatur oder eine sonstige Eingabeeinrichtung, über welche sich, insbesondere den Betrieb der Vorrichtung betreffende, Eingaben tätigen lassen, abstellen kann, gebildet ist. Konkret kann eine Benutzerarbeitsfläche durch ein Plattenelement gebildet sein, welches als (zusätzlicher) Verstärkungsrahmen der (zusätzlichen) Verstärkung bzw. Versteifung der Gehäusekonstruktion dient. Das Plattenelement ist in geeigneter Weise an der Gehäusekonstruktion befestigt, sodass sich eine auf die Gehäusekonstruktion wirkende Verstärkung bzw. Versteifung ergibt.

Die Vorrichtung kann einen innerhalb der Gehäusekonstruktion anordenbaren bzw. angeordneten Prozessblock umfassen. Auch der Prozessblock kann der Verstärkung bzw. Versteifung von Blechteilen bzw. der Gehäusekonstruktion dienen. An und/oder in dem Prozessblock können mehrere Funktionskomponenten der Vorrichtung angeordnet oder ausgebildet sein. Der Prozessblock kann sonach eine oder mehrere Befestigungsschnittstellen umfassen, welche zur Befestigung wenigstens einer Funktionskomponente an dem Prozessblock eingerichtet sind. Jeweilige Befestigungsschnittstellen können eine form- und/oder kraft- und/oder stoffschlüssige Befestigung einer Funktionskomponente an dem Prozessblock ermöglichen. Eine eine kraftschlüssige Befestigung der Funktionskomponente an dem Prozessblock ermöglichende Befestigungsschnittstelle kann z. B. eine von einem Schraubenelement durchsetzbare Bohrung, insbesondere Gewindebohrung, sein oder eine solche umfassen. In Betracht kommende formschlüssige Befestigungsarten sind z. B. Klips- oder Rastbefestigungen, in Betracht kommende stoffschlüssige Befestigungsarten sind z. B. Klebe-, Löt- oder Schweißverbindungen. Abgesehen von etwaigen Benutzer- bzw. Bedienungsschnittstellen, wie z. B. eine mit einer den Betrieb der Funktionskomponenten zur Durchführung additiver Bauvorgänge steuernden Steuerungseinrichtung der Vorrichtung kommunizierenden Bedieneinrichtung, z. B. in Form eines Touch-Panels, und/oder Anschlusselementen, z. B. zum Anschluss einer externen (elektrischen) Energieversorgung für bestimmte Funktionskomponenten, müssen bei Vorsehung eines entsprechenden Prozessblocks an der Gehäusekonstruktion keine Funktionskomponenten angeordnet oder ausgebildet sein.

Der Prozessblock nebst den an und/oder in diesem angeordneten oder ausgebildeten Funktionskomponenten stellt eine (zu der Gehäusekonstruktion) gesonderte, d. h. insbesondere unabhängig von der Gehäusekonstruktion bewegbare, Baueinheit dar; der Prozessblock bildet daher keinen Bestandteil der Gehäusekonstruktion. Der Prozessblock kann derart innerhalb der Gehäusekonstruktion angeordnet sein, dass dieser bzw. die an und/oder in diesem angeordneten oder ausgebildeten Funktionskomponenten die Gehäusekonstruktion nicht berühren; mithin ist es denkbar, dass zwischen dem Prozessblock bzw. den an und/oder in diesem angeordneten oder ausgebildeten Funktionskomponenten kein direkter mechanischer Kontakt besteht. Der Prozessblock bzw. die an und/oder in diesem angeordneten oder ausgebildeten Funktionskomponenten können sonach von der Gehäusekonstruktion mechanisch entkoppelt sein. Etwaige in die Gehäusekonstruktion eingebrachte Kräfte, Vibrationen, etc. können derart nicht auf den Prozessblock respektive die an und/oder in diesem angeordneten oder ausgebildeten Funktionskomponenten übertragen werden, was sich positiv auf deren Betrieb auswirkt.

Etwaige an und/oder in dem Prozessblock angeordnete oder ausgebildete Funktionskomponenten können an und/oder in diesem in einer exakt definierbaren bzw. definierten räumlichen Positionierung, d. h. Anordnung und/oder Ausrichtung, angeordnet sein. Der Prozessblock bildet dabei das Bezugssystem für die definierte räumliche Anordnung der an und/oder in diesem angeordneten oder ausgebildeten Funktionskomponenten. Der Prozessblock weist hierfür typischerweise definierte Prozessblockachsen auf, welche ein, z. B. kartesisches, Koordinatensystem des Prozessblocks bilden können. Der Prozessblock kann eine in geometrisch-konstruktiver Hinsicht vergleichsweise einfach aufgebaute Baueinheit darstellen, welche sich mit engen Toleranzen herstellen lässt, welche für die Verwendung des Prozessblocks als Bezugssystem für eine exakte Positionierung der Funktionskomponenten erforderlich ist. Konkret kann es sich bei dem Prozessblock z. B. um ein Frästeil handeln.

Der Prozessblock sowie die an oder in diesem angeordneten oder ausgebildeten Funktionskomponenten können eine vorkonfigurierbare oder vorkonfigurierte, gesondert handhabbare Baugruppe bilden. Es ist also möglich, den Prozessblock mit bestimmten Funktionskomponenten auszustatten und derart eine vorkonfigurierte, gesondert handhabbare, d. h. insbesondere auch transportfähige, Baugruppe zu bilden. Derart lassen sich z. B. Montage-, Reparatur- und Servicearbeiten der Vorrichtung vereinfachen.

Die Funktionskomponenten können unmittelbar oder mittelbar, d. h. unter Zwischenschaltung wenigstens eines Montagebauteils, an und/oder in dem Prozessblock angeordnet sein. Für den Fall einer mittelbaren Befestigung von Funktionskomponenten können die an dem Prozessblock angeordneten Funktionskomponenten über ein an dem Prozessblock befestigbares oder befestigtes Montagebauteil an dem Prozessblock befestigt sein. Die Funktionskomponenten können dabei in einer unveränderlichen lagefesten Anordnung und Ausrichtung an dem Montagebauteil befestigt sein, das Montagebauteil kann in einer unveränderlichen lagefesten Anordnung und Ausrichtung an dem Prozessblock befestigt sein. Das Montagebauteil kann z. B. als Montageblock oder als Montagewinkel ausgebildet sein. Das Montagebauteil verfügt über enge Toleranzen, sodass über dieses an dem Prozessblock befestigte Funktionskomponenten exakt positioniert sind.

Ein entsprechendes Montagebauteil kann wenigstens eine erste Befestigungsschnittstelle umfassen, welche zur Befestigung einer Funktionskomponente in einer unveränderlichen lagefesten Positionierung an dem Montagebauteil eingerichtet ist. Eine erste Befestigungsschnittstelle kann eine form- und/oder kraft- und/oder stoffschlüssige Befestigung der Funktionskomponente an dem Montagebauteil ermöglichen. Ein entsprechendes Montagebauteil kann ferner wenigstens eine zweite Befestigungsschnittstelle umfassen, welche zur Befestigung des Montagebauteils in einer unveränderlichen lagefesten Positionierung an dem Prozessblock eingerichtet ist. Eine zweite Befestigungsschnittstelle kann eine form- und/oder kraft- und/oder stoffschlüssige Befestigung des Montagebauteils an dem Prozessblock ermöglichen. Eine eine kraftschlüssige Befestigung der Funktionskomponente an dem Montagebauteil ermöglichende Befestigungsschnittstelle kann z. B. eine von einem Schraubenelement durchsetzbare Bohrung, insbesondere Gewindebohrung, sein oder eine solche umfassen, auch eine eine kraftschlüssige Befestigung des Montagebauteils an dem Prozessblock ermöglichende Befestigungsschnittstelle kann z. B. eine von einem Schraubenelement durchsetzbare Bohrung, insbesondere Gewindebohrung, sein oder eine solche umfassen. Form- bzw. stoffschlüssige Befestigungsarten wurden weiter oben benannt. Wenngleich die Positionierung der Funktionskomponente(n) an dem Montagebauteil bzw. die Positionierung des Montagebauteils an dem Prozessblock unveränderlich lagefest ist, kann diese (beschädigungs- bzw. zerstörungsfrei lösbar sein).

Der Prozessblock kann einen Prozessblockgrundkörper umfassen. Der Prozessblockgrundkörper kann die eine Funktionskomponente darstellende Prozesskammer der Vorrichtung begrenzen. Die Prozesskammer der Vorrichtung kann sonach durch einen entsprechenden Innenraum in dem Prozessblock(grundkörper) gebildet sein.

An dem Prozessblockgrundkörper kann wenigstens ein Bestandteil der eine Funktionskomponente bildenden Belichtungseinrichtung, welche zur selektiven Belichtung selektiv zu verfestigender Baumaterialschichten eingerichtet ist, positionsgenau anordenbar oder angeordnet sein. Der wenigstens eine Bestandteil der Belichtungseinrichtung kann z. B. an einer freiliegenden Außenfläche des Prozessblockgrundkörpers angeordnet bzw. befestigt sein. Als Bestandteil der Belichtungseinrichtung kann z. B. eine Energiestrahlerzeugungseinrichtung und/oder eine Strahlablenkeinrichtung und/oder wenigstens ein optisches Element, insbesondere ein Filterelement, ein Objektivelement oder ein Linsenelement, der Belichtungseinrichtung an dem Prozessblockgrundkörper anordenbar oder angeordnet sein. Entsprechende Bestandteile der Belichtungseinrichtung können auch über wenigstens ein entsprechendes Montagebauteil an dem Prozessblockgrundkörper befestigt sein.

An dem Prozessblockgrundkörper kann (auch) wenigstens ein Bestandteil der eine Funktionskomponente bildenden Beschichtungseinrichtung, welche zur Ausbildung von selektiv zu verfestigenden Baumaterialschichten in einer Bauebene der Vorrichtung eingerichtet ist, positionsgenau anordenbar oder angeordnet sein. Der wenigstens eine Bestandteil der Beschichtungseinrichtung kann z. B. an einer die Prozesskammer begrenzenden Innenfläche des Prozessblockgrundkörpers angeordnet bzw. befestigt sein. Als Bestandteil der Beschichtungseinrichtung kann eine Führungseinrichtung für ein ein, insbesondere klingenförmiges, Beschichtungswerkzeug aufweisendes Beschichtungselement und/oder ein ein, insbesondere klingenförmiges, Beschichtungswerkzeug aufweisendes Beschichtungselement an dem Prozessblockgrundkörper anordenbar oder angeordnet sein. Entsprechende Bestandteile der Beschichtungseinrichtung können auch über ein entsprechendes Montagebauteil an dem Prozessblockgrundkörper befestigt sein.

Weiterhin kann an dem Prozessblockgrundkörper (auch) wenigstens ein Bestandteil einer eine Funktionskomponente der Vorrichtung bildenden Erfassungseinrichtung, welche zur, optischen, Erfassung wenigstens einer, insbesondere einen prozessrelevanten (physikalischen) Parameter, wie z. B. Atmosphäre, Druck, Temperatur, Schmelzpoolgeometrie, etc. betreffenden, Erfassungsgröße eingerichtet ist, positionsgenau anordenbar oder angeordnet sein. Auch der wenigstens eine Bestandteil der Erfassungseinrichtung kann z. B. an einer die Prozesskammer begrenzenden Innenfläche des Prozessblockgrundkörpers angeordnet bzw. befestigt sein. Als Bestandteil der Erfassungseinrichtung kann z. B. ein optisches oder thermisches Erfassungselement, insbesondere eine optische oder thermische Kamera, an dem Prozessblockgrundkörper anordenbar oder angeordnet sein. Entsprechende Bestandteile der Erfassungseinrichtung können auch über ein entsprechendes Montagebauteil an dem Prozessblockgrundkörper befestigt sein.

An dem Prozessblockgrundkörper kann ferner ein einen Pulveraufnahmeraum begrenzendes Pulvermodul positionsgenau anordenbar oder angeordnet sein. Das Pulvermodul kann einen bodenseitigen Abschluss des Prozessblockgrundkörpers bilden. Bei dem Pulvermodul kann es sich insbesondere um ein Baumodul, in dessen Pulveraufnahmeraum (Bauraum) die eigentliche additive Herstellung dreidimensionaler Objekte erfolgt, handeln.

Zur Realisierung einer Schwingungsentkopplung des Prozessblocks von der Gehäusekonstruktion kann zwischen dem Prozessblock und der Gehäusekonstruktion wenigstens ein Dämpfungs- bzw. Schwingungsentkopplungselement angeordnet oder ausgebildet sein. Typischerweise sind für eine ausreichende Schwingungsentkopplung mehrere Dämpfungs- bzw. Schwingungsentkopplungselement zwischen den Prozessblock und die Gehäusekonstruktion zu schalten. Ein jeweiliges Dämpfungs- bzw. Schwingungsentkopplungselement kann z. B. als elastischer oder viskoelastischer Körper, insbesondere als elastischer Federkörper oder als viskoelastischer Elastomerkörper, ausgebildet sein.

Dem Prozessblock kann eine Führungseinrichtung zugeordnet sein. Die Führungseinrichtung kann dazu eingerichtet sein, den Prozessblock in eine Betriebsposition, in welcher der Prozessblock innerhalb der Gehäusekonstruktion angeordnet ist, und in eine Nichtbetriebsposition, in welcher der Prozessblock außerhalb der Gehäusekonstruktion angeordnet ist, und umgekehrt, zu bewegen. Denkbar ist es auch, dass die Führungseinrichtung eingerichtet ist, den Prozessblock in mehrere definierte Positionen innerhalb der Gehäusekonstruktion zu bewegen, d. h. gegebenenfalls auch zu drehen. Eine entsprechende Führungseinrichtung kann geeignete, z. B. schienenartige bzw. -förmige, Führungselemente umfassen, entlang welcher der Prozessblock, z. B. zwischen der Betriebsposition und der Nichtbetriebsposition, bewegbar ist. Durch die Vorsehung einer entsprechenden Führungseinrichtung können z. B. Montage-, Reparatur- und Servicearbeiten der Vorrichtung vereinfacht werden.

Der Prozessblock kann wenigstens ein Anschlusselement, z. B. zum Anschluss einer externen (elektrischen) Energie- oder Inertgasversorgung für die an oder in dem Prozessblock angeordneten oder ausgebildeten Funktionskomponenten, umfassen. Der Prozessblock kann sonach eine (weitgehend) autarke Funktionseinheit bilden.

Neben der Vorrichtung betrifft die Erfindung auch eine Gehäusekonstruktion für eine Vorrichtung zur additiven Herstellung dreidimensionaler Objekte durch sukzessives schichtweises selektives Belichten und damit einhergehendes Verfestigen von Baumaterialschichten aus einem vermittels eines Energiestrahls verfestigbaren Baumaterial, wobei innerhalb der Gehäusekonstruktion mehrere Funktionskomponenten der Vorrichtung anordenbar oder ausbildbar sind. Wenigstens eine Gehäusewandung der Gehäusekonstruktion ist als ein Blechteil ausgebildet bzw. umfasst wenigstens ein Blechteil. Obige Ausführungen im Zusammenhang mit der der Vorrichtung zugehörigen Gehäusekonstruktion gelten analog.

Die Erfindung ist anhand von Ausführungsbeispielen in den Zeichnungsfiguren näher erläutert. Dabei zeigen:
- Fig. 1, 2: je eine Prinzipdarstellung einer Vorrichtung gemäß einem Ausführungsbeispiel;
- Fig. 3: eine Prinzipdarstellung einer Vorrichtung gemäß einem weiteren Ausführungsbeispiel; und
- Fig. 4: eine Prinzipdarstellung einer Montagesituation einer Funktionskomponente der Vorrichtung gemäß einem Ausführungsbeispiel.

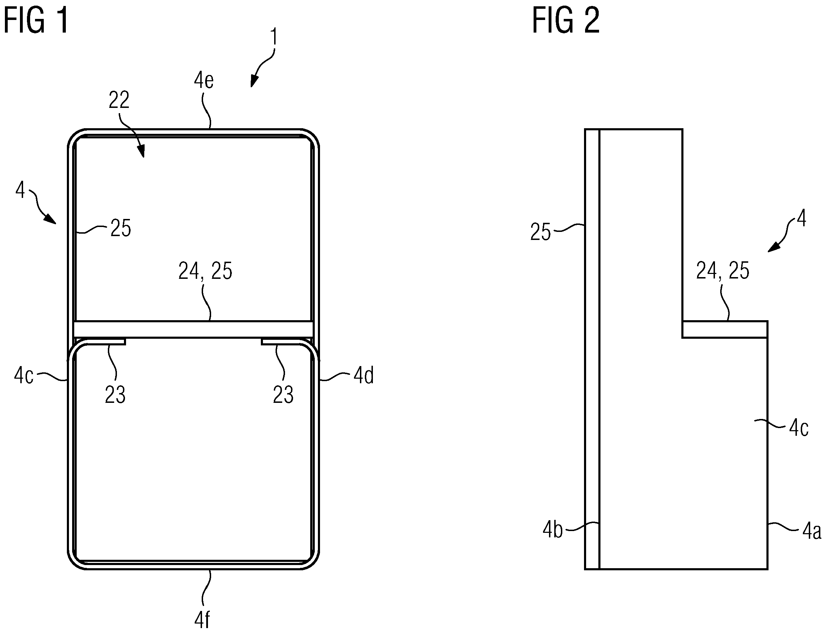

Die Fig. 1, 2 zeigen je eine Prinzipdarstellung einer Vorrichtung 1 gemäß einem Ausführungsbeispiel. In den Fig. 1, 2 ist nur der für die Erläuterung des nachfolgend beschriebenen Prinzips relevante Ausschnitt der Vorrichtung 1, d. h. insbesondere der der Vorrichtung 1 zugehörigen Gehäusekonstruktion 4, in gezeigt. Die Vorrichtung 1 ist in Fig. 1 in einer Frontansicht und in Fig. 2 in einer dazu um 90° gedrehten Seitenansicht dargestellt.

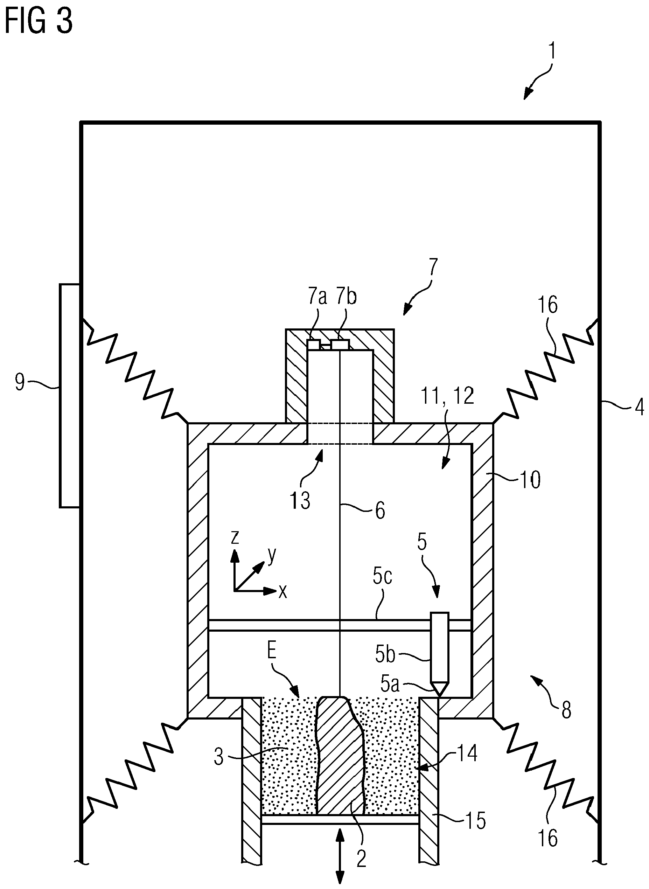

Die Vorrichtung 1 dient der additiven Herstellung dreidimensionaler Objekte 2 (vgl. Fig. 3), d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels eines Laserstrahls 6. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" CAD-Daten des herzustellenden Objekts 2 beinhalten. Die Vorrichtung 1 kann als Laser-CUSING®-Vorrichtung, d. h. als Vorrichtung zur Durchführung selektiver Laserschmelzverfahren, ausgebildet sein.

Die Vorrichtung 1 umfasst eine äußere Gehäusekonstruktion 4. Die Gehäusekonstruktion 4 bildet eine (geschlossene) Gehäuse- bzw. Verkleidungskonstruktion der Vorrichtung 1 und definiert sonach (im Wesentlichen) die äußere Gestalt der Vorrichtung 1.

Die Gehäusekonstruktion 4 umfasst mehrere Gehäusewandungen 4a - 4f. Die Gehäusewandungen bzw. Gehäusewandungsabschnitte begrenzen einen Gehäusekonstruktionsinnenraum 22. In dem Gehäusekonstruktionsinnenraum 22 sind mehrere Funktionskomponenten der Vorrichtung, d. h. z. B. eine Prozesskammer 12, die, typischerweise in der Prozesskammer 12 angeordnete, Beschichtungseinrichtung 5 sowie die, typischerweise an der Prozesskammer 12 angeordnete oder ausgebildete, Belichtungseinrichtung 6, angeordnet oder ausgebildet.

Bei den Gehäusewandungen 4a - 4f handelt es sich bei dem in den Fig. gezeigten Beispiel einer (im Wesentlichen) quaderartigen bzw. -förmigen Gehäusekonstruktion 4, d. h. einer Gehäusekonstruktion mit einer (im Wesentlichen) viereckigen Grund- bzw. Querschnittsform, um eine eine Vorderseite der Gehäusekonstruktion 4 bildende Frontwandung 4a, eine dieser gegenüber liegend angeordnete, eine Rückseite der Gehäusekonstruktion 4 bildende Rückwandung 4b, eine sich (recht)winklig zu diesen zwischen der Front- und der Rückwandung 4a, 4b erstreckende erste Seitenwandung 4c, eine der ersten Seitenwandung 4c gegenüber liegend angeordnete, sich (recht)winklig zu diesen zwischen der Front- und der Rückwandung 4a, 4b erstreckende zweite Seitenwandung 4d, eine Deckenwandung 4e und eine Bodenwandung 4f.

Die Gehäusewandungen 4a - 4f sind durch Blechteile gebildet. Die Gehäusekonstruktion 4 umfasst sonach keine mehrere aneinander befestigte profilartige Rahmenkonstruktionselemente umfassende Rahmenkonstruktion, sondern besteht aus Blechteilen.

Ersichtlich haben die Blechteile eine flächige geometrisch-konstruktive Gestalt. Konkret weisen die Blechteile eine vier- bzw. rechteckige geometrisch-konstruktive flächige Gestalt auf. Die Abmessungen der Blechteile sind im Hinblick auf die Abmessungen der durch diese gebildeten Gehäusewandungen 4a - 4f gewählt; mithin entsprechen die Abmessungen der Blechteile den Abmessungen der durch diese jeweils gebildeten Gehäusewandungen 4a - 4f.

Die Blechteile können aus einem Stahl- bzw. Edelstahlblech gebildet sein. Die Wandstärke (Dicke) eines jeweiligen Blechteils liegt in einem Bereich zwischen 1 und 10 mm, insbesondere zwischen 2 und 6 mm. Es ist denkbar, dass ein Blechteil Blechteilabschnitte unterschiedlicher Stärke aufweist; derart können die strukturellen Eigenschaften des Blechteils gezielt beeinflusst werden.

Die strukturellen Eigenschaften der Blechteile erlauben eine tragende Funktion für die Gehäusekonstruktion 4. Es ist grundsätzlich nicht notwendig, weitere tragende Konstruktionselemente zur Ausbildung der Gehäusekonstruktion vorzusehen. In den Fig. 1, 2 ist gleichwohl eine weiter unten näher beschriebene optionale abschnittsweise Verstärkung der Blechteile bzw. der Gehäusekonstruktion 4 durch geeignete (mechanische) Verstärkungs- bzw. Versteifungselemente (mechanisch) gezeigt.

Bei einem Blechteil kann es sich um ein in fertigungstechnischer Hinsicht vergleichsweise einfach herstellbares Stanz-/Biegeteil handeln. Stanz-/Biegeteile lassen sich mit engen Toleranzen in nahezu beliebigen geometrisch-konstruktiven Ausgestaltungen herstellen. Im Hinblick auf die Ausbildung eines Blechteils als Biegeteil gilt, dass das Blechteil zwei- oder dreidimensional gebogen sein kann.

Anhand der Fig. 1, 2 ist ersichtlich, dass ein Blechteil mehrere, insbesondere (recht)winklig zueinander verlaufende, Blechteilabschnitte umfassen kann. Dabei kann ein erster Blechteilabschnitt wenigstens einen Teil einer ersten Gehäusewandung 4a - 4f bzw. eine erste Gehäusewandung 4a - 4f bilden und ein weiterer Blechteilabschnitt wenigstens einen Teil wenigstens einer weiteren Gehäusewandung 4a - 4f bzw. wenigstens eine weitere Gehäusewandung 4a - 4f bilden. Bezogen auf die (im Wesentlichen) quaderartige- bzw. förmige Gestalt der Gehäusekonstruktion 4 kann ein jeweiliger Blechteilabschnitt wenigstens einen Teil der Front- und/oder Seiten- und/oder Rückwandung der Gehäusekonstruktion 4 bilden. Anhand von Fig. 1 ist ersichtlich, dass z. B. die Deckenwandung 4e, die Seitenwandungen 4c, 4d sowie die Bodenwandung 4e einteilig aus einem mehrfach gebogenen Blechteil gebildet sein können. Im Allgemeinen können Blechteile z. B. eine winklige Grundform, d. h. z. B. eine (im Wesentlichen) L-oder U-förmige Grundform, aufweisen. Insofern kann auch eine aus einem Blechteil gebildete Gehäusewandung 4a - 4f mehrere, insbesondere winklig zueinander verlaufende, Gehäusewandungsabschnitte umfassen, wobei ein jeweiliger Gehäusewandungsabschnitt wenigstens einen Teil der Front-, Seiten-, Rück- Decken- oder Bodenwandung der Gehäusekonstruktion 4 bildet.

Die Blechteile können eine oder mehrere Befestigungsschnittstelle(n) (nicht gezeigt) umfassen, welche zur Befestigung einer Funktionskomponente an dem jeweiligen Blechteil eingerichtet sind. Grundsätzlich können jeweilige Befestigungsschnittstellen eine form- und/oder kraft- und/oder stoffschlüssige Befestigung einer Funktionskomponente an dem Blechteil ermöglichen.

Benachbart angeordnete Blechteile können unmittelbar form- und/oder kraft- und/oder stoffschlüssig aneinander befestigt sein. Die Befestigung jeweiliger Blechteile aneinander kann sonach über form- und/oder kraft- und/oder stoffschlüssige Befestigungsarten erfolgen, welche eine lösbare (beschädigungs- bzw. zerstörungsfrei) oder eine (beschädigungs- bzw. zerstörungsfrei) unlösbare Befestigung jeweiliger Blechteile ermöglichen. Lediglich beispielhaft wird auf Niet-, Klemm-, Schraub- oder Steckbefestigungen als Beispiele für form- und/oder kraftschlüssige Befestigungsarten sowie auf Klebe-, Löt- oder Schweißbefestigungen als Beispiele für stoffschlüssige Befestigungsarten verwiesen.

Benachbart angeordnete Blechteile können auch mittelbar, d. h. unter Zwischenschaltung wenigstens eines Montagebauteils (nicht gezeigt), form- und/oder kraft- und/oder stoffschlüssig aneinander befestigt sein. Die Blechteile können dabei jeweils in einer unveränderlichen lagefesten Anordnung und Ausrichtung an dem Montagebauteil und somit aneinander befestigt sein. Das Montagebauteil kann z. B. als Montageblock oder als Montagewinkel ausgebildet sein.

Wie erwähnt, kann es erforderlich sein, die Blechteile bzw. die Gehäusekonstruktion 4 durch geeignete (mechanische) Verstärkungs- bzw. Versteifungselemente (mechanisch) zu verstärken bzw. zu versteifen. Ein jeweiliges Blechteil kann demnach mit einer Verstärkungs- bzw. einer Versteifungsstruktur (nicht gezeigt), insbesondere in Form einer wenigstens eine Sicke umfassenden Sickenstruktur, ausgebildet sein.

Eine Verstärkung bzw. Versteifung der Blechteile bzw. der Gehäusekonstruktion 4 kann alternativ oder ergänzend auch durch einen der Gehäusekonstruktion 4 zugeordneten Verstärkungsrahmen 25 realisiert sein. Der Verstärkungsrahmen 25 kann außerhalb und/oder innerhalb der Gehäusekonstruktion 4 angeordnet oder ausgebildet sein. Der Verstärkungsrahmen 25 liegt zumindest abschnittsweise an dem zu verstärkenden bzw. zu versteifenden Blechteil bzw. der zu verstärkenden bzw. zu versteifenden Gehäusewandung 4a - 4f an. Bei dem Verstärkungsrahmen 25 kann es sich um ein(e) eigens der Verstärkung bzw. der Versteifung von Blechteilen bzw. der Gehäusekonstruktion 4 dienende(s) Bauteil(gruppe) handeln.

In dem in den Fig. 1, 2 gezeigten Ausführungsbeispiel sind an den die Gehäusewandungen 4c, 4d bildenden Blechteilen Befestigungsschnittstellen in Form von Laschen 23 gezeigt, auf welchen ein eine Benutzerarbeitsfläche bildendes Plattenelement 24 befestigt ist. Das Plattenelement 24 dient als (zusätzlicher) Verstärkungsrahmen 25 der (zusätzlichen) Verstärkung bzw. Versteifung der Gehäusekonstruktion 4.

Ferner ist es denkbar, dass der oder ein Verstärkungsrahmen 25 durch einen Abschnitt einer Schaltschrankkonstruktion (nicht gezeigt), in welcher elektrische und/oder elektronische Komponenten der Vorrichtung 1 angeordnet oder ausgebildet sind, gebildet ist. Beispielsweise kann eine Gehäusekonstruktion des Schaltschranks (zusätzlich) dazu dienen, die Gehäusekonstruktion 4 zu verstärken bzw. zu versteifen.

Es ist auch denkbar, dass der oder ein Verstärkungsrahmen 25 durch ein die Prozesskammer 12 bodenseitig, seitlich oder deckenseitig begrenzendes, insbesondere plattenartiges, Prozesskammerwandungselement (nicht gezeigt) gebildet ist. Beispielsweise kann ein die Prozesskammer 12 seitlich begrenzendes Prozesskammerwandungselement dazu dienen, die Gehäusekonstruktion 4 zu verstärken bzw. zu versteifen. Dies kann dadurch realisiert sein, dass sich das Prozesskammerwandungselement zumindest abschnittsweise entlang einer Gehäusewandung 4c, 4d erstreckt. Ein die Prozesskammer 12 bodenseitig begrenzendes, eine Bauebene umfassendes Prozesskammerwandungselement kann dazu dienen, die Gehäusekonstruktion 4 zu verstärken bzw. zu versteifen, indem es sich unmittelbar zwischen zwei einander gegenüber liegend angeordneten Gehäusewandungen erstreckend angeordnet bzw. ausgebildet ist. Analoges gilt für ein die Prozesskammer 12 deckenseitig begrenzendes Prozesskammerwandungselement.

Fig. 3 zeigt eine Prinzipdarstellung einer Vorrichtung 1 gemäß einem weiteren Ausführungsbeispiel in einer geschnittenen Ansicht.

In Fig. 3 sind die zur Durchführung additiver Bauvorgänge erforderlichen Funktionskomponenten schematisch gezeigt. Hierzu zählt die Beschichtungseinrichtung 5, welche zur Ausbildung selektiv zu verfestigender Baumaterialschichten (in der Bauebene der Vorrichtung 1) eingerichtet ist, und die Belichtungseinrichtung 7, welche zur selektiven Belichtung selektiv zu verfestigender Baumaterialschichten (in der Bauebene der Vorrichtung 1) eingerichtet ist. Die Beschichtungseinrichtung 5 umfasst mehrere Bestandteile, nämlich ein ein, insbesondere klingenförmiges, Beschichtungswerkzeug 5a umfassendes Beschichtungselement 5b sowie eine Führungseinrichtung 5c zur Führung des Beschichtungselements 5b entlang einer definierten Bewegungsbahn. Auch die Belichtungseinrichtung 7 umfasst mehrere Bestandteile nämlich eine Strahlerzeugungseinrichtung 7a zur Erzeugung eines Laserstrahls 6, eine Strahlablenkeinrichtung 7b zur Ablenkung des von der Strahlerzeugungseinrichtung 7a erzeugten Laserstrahls 6 auf einen zu belichtenden Bereich einer selektiv zu verfestigenden Baumaterialschicht sowie diverse optische Elemente (nicht gezeigt), wie z. B. Filterelemente, Objektivelemente, Linsenelemente, etc., welche typischerweise zwischen der Strahlerzeugungseinrichtung 7a und der Strahlablenkeinrichtung 7b angeordnet sind.

Die Vorrichtung 1 umfasst einen innerhalb der Gehäusekonstruktion 4 angeordneten Prozessblock 8. Ersichtlich sind die genannten Funktionskomponenten der Vorrichtung 1 an und/oder in dem Prozessblock 8 angeordnet. Der Prozessblock 8 umfasst sonach eine oder mehrere Befestigungsschnittstellen (nicht näher bezeichnet), welche zur Befestigung wenigstens einer Funktionskomponente an dem Prozessblock 8 eingerichtet sind. Jeweilige Befestigungsschnittstellen können eine form- und/oder kraft- und/oder stoffschlüssige Befestigung einer Funktionskomponente an dem Prozessblock 8 ermöglichen. Eine eine kraftschlüssige Befestigung der Funktionskomponente an dem Prozessblock 8 ermöglichende Befestigungsschnittstelle kann eine von einem Schraubenelement durchsetzbare Bohrung, insbesondere Gewindebohrung, sein oder eine solche umfassen. In Betracht kommende formschlüssige Befestigungsarten sind z. B. Klips- oder Rastbefestigungen, in Betracht kommende stoffschlüssige Befestigungsarten sind z. B. Klebe-, Löt- oder Schweißverbindungen. Abgesehen von etwaigen Benutzer- bzw. Bedienungsschnittstellen (nicht gezeigt), wie z. B. eine mit einer den Betrieb der Funktionskomponenten zur Durchführung additiver Bauvorgänge steuernden Steuerungseinrichtung (nicht gezeigt) kommunizierenden Bedieneinrichtung 9, z. B. in Form eines Touch-Panels, und/oder Anschlusselementen (nicht gezeigt), z. B. zum Anschluss einer externen (elektrischen) Energieversorgung für bestimmte Funktionskomponenten, sind an der Gehäusekonstruktion 4 keine Funktionskomponenten angeordnet oder ausgebildet.

Der Prozessblock 8 nebst den an und/oder in diesem angeordneten bzw. ausgebildeten Funktionskomponenten stellt eine (zu der Gehäusekonstruktion 4) gesonderte, d. h. insbesondere unabhängig von der Gehäusekonstruktion 4 bewegbare, Baueinheit dar; ersichtlich bildet der Prozessblock 8 in dem Ausführungsbeispiel keinen Bestandteil der Gehäusekonstruktion 4. Der Prozessblock 8 ist derart innerhalb der Gehäusekonstruktion 4 angeordnet, dass dieser bzw. die an und/oder in diesem angeordneten oder ausgebildeten Funktionskomponenten die Gehäusekonstruktion 4 nicht berühren; zwischen dem Prozessblock 8 bzw. den an und/oder in diesem angeordneten oder ausgebildeten Funktionskomponenten und der Gehäusekonstruktion 4 besteht in dem Ausführungsbeispiel kein direkter mechanischer Kontakt. Der Prozessblock 8 bzw. die an und/oder in diesem angeordneten oder ausgebildeten Funktionskomponenten sind sonach von der Gehäusekonstruktion 4 mechanisch entkoppelt. Etwaige in die Gehäusekonstruktion 4 eingebrachte Kräfte, Vibrationen, etc. können derart nicht auf den Prozessblock 8 respektive die an und/oder in diesem angeordneten oder ausgebildeten Funktionskomponenten übertragen werden, was sich positiv auf deren Betrieb auswirkt.

Die an und/oder in dem Prozessblock 8 angeordneten bzw. ausgebildeten Funktionskomponenten sind an und/oder in diesem in einer exakt definierbaren bzw. definierten räumlichen Positionierung, d. h. Anordnung und/oder Ausrichtung, angeordnet. Der Prozessblock 8 bildet dabei das Bezugssystem für die definierte räumliche Anordnung der an und/oder in diesem angeordneten bzw. ausgebildeten Funktionskomponenten. Hierfür weist der Prozessblock 8 definierte Prozessblockachsen (x-, y- und z-Achse) auf, welche ein, z. B. kartesisches, Koordinatensystem des Prozessblocks 8 bilden. Der Prozessblock 8 stellt eine in geometrisch-konstruktiver Hinsicht vergleichsweise einfach aufgebaute Baueinheit dar - konkret kann es sich bei dem Prozessblock 8 z. B. um ein Frästeil handeln -, welche(s) mit vergleichsweise geringem Aufwand mit engen Toleranzen herstellbar ist. Entsprechend enge Toleranzen sind für die Verwendung des Prozessblocks 8 als Bezugssystem für eine exakte Positionierung der Funktionskomponenten erforderlich.

Der Prozessblock 8 umfasst einen Prozessblockgrundkörper 10. Der Prozessblockgrundkörper 10 umfasst in dem Ausführungsbeispiel eine oder mehrere, abschnittsweise (recht)winklig zueinander verlaufende, Wandungen bzw. Wandungsabschnitte (nicht näher bezeichnet), welche einen Innenraum 11 begrenzen. Der Innenraum 11 des Prozessblockgrundkörpers 10 bildet die eine Funktionskomponente darstellende (inertisierbare) Prozesskammer 12. Die Prozesskammer 12 ist sonach in dem Prozessblock 8 ausgebildet.

An dem Prozessblockgrundkörper 10 sind ferner die Bestandteile, d. h. die Laserstrahlerzeugungseinrichtung 7a, die Strahlablenkeinrichtung 7b, die optischen Elemente, der Belichtungseinrichtung 7 positionsgenau angeordnet. Die Bestandteile der Belichtungseinrichtung 7 sind in dem Ausführungsbeispiel an einer durch eine mit einer Durchtrittsöffnung 13 für den Laserstrahl 6 versehenen oberen Wandung des Prozessblockgrundkörpers 10 gebildeten freiliegenden Außenfläche des Prozessblockgrundkörpers 10 angeordnet bzw. befestigt.

An dem Prozessblockgrundkörper 10 sind weiter auch die Bestandteile, d. h. das Beschichtungswerkzeug 5a, das Beschichtungselement 5b, die Führungseinrichtung 5c, der Beschichtungseinrichtung 5 positionsgenau angeordnet. Die Bestandteile der Beschichtungseinrichtung 5 sind in dem Ausführungsbeispiel an einer durch eine den Innenraum 11 bzw. die Prozesskammer 12 begrenzenden Wandung gebildeten Innenfläche des Prozessblockgrundkörpers 10 angeordnet bzw. befestigt.

Weiterhin können an dem Prozessblockgrundkörper 10 (auch) Bestandteile (nicht gezeigt) einer eine Funktionskomponente der Vorrichtung 1 bildenden Erfassungseinrichtung (nicht gezeigt), welche zur, optischen, Erfassung wenigstens einer, insbesondere einen prozessrelevanten (physikalischen) Parameter, wie z. B. Atmosphäre, Druck, Temperatur, Schmelzpoolgeometrie, etc. betreffenden, Erfassungsgröße eingerichtet ist, positionsgenau anordenbar bzw. angeordnet sein. Auch die Bestandteile der Erfassungseinrichtung können z. B. an einer entsprechenden Innenfläche des Prozessblockgrundkörpers 10 angeordnet bzw. befestigt sein. Als Bestandteil der Erfassungseinrichtung kann z. B. ein optisches oder thermisches Erfassungselement, insbesondere eine optische oder thermische Kamera, an dem Prozessblockgrundkörper 10 anordenbar oder angeordnet sein.

An dem Prozessblockgrundkörper 10 ist ferner ein einen Pulveraufnahmeraum 14 begrenzendes Pulvermodul 15 positionsgenau angeordnet. Das Pulvermodul 15 bildet einen bodenseitigen Abschluss des Prozessblockgrundkörpers 10. Bei dem Pulvermodul 15 handelt es sich um ein Baumodul, in dessen Pulveraufnahmeraum 14 (Bauraum) die eigentliche additive Herstellung dreidimensionaler Objekte 2 erfolgt.

Der Prozessblock 8 sowie die an oder in diesem angeordneten oder ausgebildeten Funktionskomponenten können eine vorkonfigurierbare oder vorkonfigurierte, gesondert handhabbare Baugruppe bilden. Es ist also möglich, den Prozessblock 8 mit bestimmten Funktionskomponenten auszustatten und derart eine vorkonfigurierte, gesondert handhabbare, d. h. insbesondere auch transportfähige, Baugruppe zu bilden.

Zur Realisierung einer optionalen Schwingungsentkopplung des Prozessblocks 8 von der Gehäusekonstruktion 4 sind in dem Ausführungsbeispiel zwischen dem Prozessblock 8 und der Gehäusekonstruktion 4 angeordnete bzw. ausgebildete Dämpfungs- bzw. Schwingungsentkopplungselemente 16 vorhanden. Ein jeweiliges Dämpfungs- bzw. Schwingungsentkopplungselement 16 kann z. B. als elastischer oder viskoelastischer Körper, insbesondere als elastischer Federkörper oder als viskoelastischer Elastomerkörper, ausgebildet sein. Entsprechende Dämpfungs- bzw. Schwingungsentkopplungselement 16 sind optional vorhanden.

Dem Prozessblock 8 kann eine Führungseinrichtung (nicht gezeigt) zugeordnet sein. Die Führungseinrichtung ist z. B. dazu eingerichtet, den Prozessblock 8 in eine Betriebsposition, in welcher der Prozessblock 8 innerhalb der Gehäusekonstruktion 4 angeordnet ist, und in eine Nichtbetriebsposition, in welcher der Prozessblock 8 außerhalb der Gehäusekonstruktion 4 angeordnet ist, und umgekehrt, zu bewegen. Denkbar ist es auch, dass die Führungseinrichtung eingerichtet ist, den Prozessblock 8 in mehrere definierte Positionen innerhalb der Gehäusekonstruktion 4 zu bewegen, d. h. gegebenenfalls auch zu drehen. Eine entsprechende Führungseinrichtung kann geeignete, z. B. schienenartige bzw. -förmige, Führungselemente umfassen, entlang welcher der Prozessblock 8 zwischen verschiedenen Positionen, d. h. z. B. zwischen der Betriebsposition und der Nichtbetriebsposition, bewegbar ist.

Der Prozessblock 8 kann wenigstens ein Anschlusselement (nicht gezeigt), z. B. zum Anschluss einer externen (elektrischen) Energie- oder Inertgasversorgung für die an oder in dem Prozessblock 8 angeordneten oder ausgebildeten Funktionskomponenten, umfassen. Entsprechende Anschlusselemente können z. B. an dem Prozessblockgrundkörper 10 angeordnet oder ausgebildet sein.

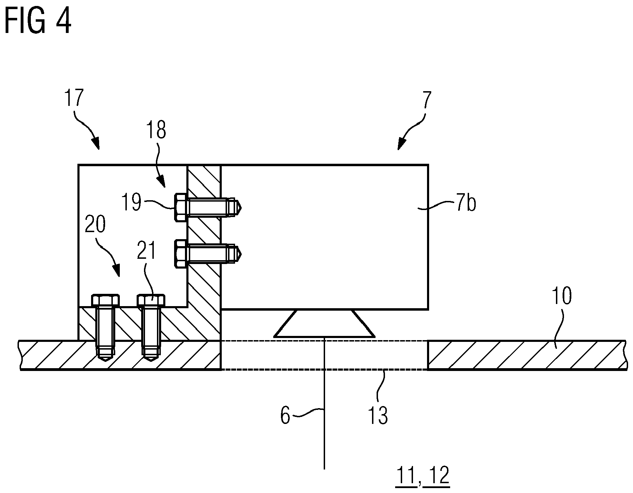

Grundsätzlich können die Funktionskomponenten können unmittelbar oder mittelbar, d. h. unter Zwischenschaltung wenigstens eines Montagebauteils 17 (vgl. Fig. 4), an und/oder in dem Prozessblock 8 angeordnet sein.

Fig. 4 zeigt eine Prinzipdarstellung einer Montagesituation einer Funktionskomponente der Vorrichtung 1 gemäß einem Ausführungsbeispiel.

In Fig. 4 ist der Fall einer mittelbaren Befestigung einer Funktionskomponente, hier beispielhaft einer Strahlablenkeinrichtung 7a als Bestandteil der Belichtungseinrichtung 7, gezeigt. Die Funktionskomponente ist über ein an dem Prozessblock 8 bzw. dem Prozessblockgrundkörper 10 befestigtes Montagebauteil 17 an dem Prozessblock 8 befestigt. Die Funktionskomponente ist dabei in einer unveränderlichen lagefesten Anordnung und Ausrichtung an dem Montagebauteil 17 befestigt, das Montagebauteil 17 ist in einer unveränderlichen lagefesten Anordnung und Ausrichtung an dem Prozessblock 8 befestigt. Das Montagebauteil 17, welches z. B. als Montageblock oder als Montagewinkel ausgebildet sein kann, verfügt über enge Toleranzen, sodass die über dieses an dem Prozessblock 8 befestigte Funktionskomponente exakt positioniert ist.

Das Montagebauteil 17 umfasst wenigstens eine erste Befestigungsschnittstelle 18, welche zur Befestigung der Funktionskomponente in einer unveränderlichen lagefesten Positionierung an dem Montagebauteil 17 eingerichtet ist. Die erste Befestigungsschnittstelle 18 ermöglicht in dem Ausführungsbeispiel eine kraftschlüssige Befestigung der Funktionskomponente an dem Montagebauteil 17. Konkret umfasst die erste Befestigungsschnittstelle 18 mehrere von einem Schraubenelement 19 durchsetzbare Bohrungen (nicht gezeigt), insbesondere Gewindebohrungen. Das Montagebauteil 17 umfasst ferner wenigstens eine zweite Befestigungsschnittstelle 20, welche zur Befestigung des Montagebauteils 17 in einer unveränderlichen lagefesten Positionierung an dem Prozessblock 8 eingerichtet ist. Auch die zweite Befestigungsschnittstelle 20 ermöglicht in dem Ausführungsbeispiel eine kraftschlüssige Befestigung des Montagebauteils 17 an dem Prozessblock 8. Konkret umfasst auch die zweite Befestigungsschnittstelle 20 mehrere von einem Schraubenelement 21 durchsetzbare Bohrungen (nicht gezeigt), insbesondere Gewindebohrungen.

Wenngleich die Positionierung der Funktionskomponente an dem Montagebauteil 17 bzw. die Positionierung des Montagebauteils 17 an dem Prozessblock 8 unveränderlich lagefest ist, kann diese, wie anhand der Schraubbefestigungen ersichtlich, (beschädigungs- bzw. zerstörungsfrei lösbar sein).

## Patentansprüche

1. Vorrichtung (1) zur additiven Herstellung dreidimensionaler Objekte (2) durch sukzessives schichtweises selektives Belichten und damit einhergehendes Verfestigen von Baumaterialschichten aus einem vermittels eines Energiestrahls (6) verfestigbaren Baumaterial (3), umfassend eine mehrere Gehäusewandungen (4a - 4f) umfassende äußere Gehäusekonstruktion (4), wobei innerhalb der Gehäusekonstruktion (4) mehrere Funktionskomponenten der Vorrichtung (1) angeordnet oder ausgebildet sind, **dadurch gekennzeichnet, dass** wenigstens eine Gehäusewandung (4a - 4f) als ein Blechteil ausgebildet ist oder wenigstens ein Blechteil umfasst.

2. Vorrichtung nach Anspruch 1, **dadurch gekennzeichnet, dass** alle Gehäusewandungen (4a - 4f) der Gehäusekonstruktion (4) als Blechteil ausgebildet sind.

3. Vorrichtung nach Anspruch 1 oder 2, **dadurch gekennzeichnet, dass** ein Blechteil mehrere, insbesondere winklig zueinander verlaufende, Blechteilabschnitte umfasst, wobei ein erster Blechteilabschnitt wenigstens einen Teil einer ersten Gehäusewandung (4a - 4f) bildet und wenigstens ein weiterer Blechteilabschnitt wenigstens einen Teil wenigstens einer weiteren Gehäusewandung (4a - 4f) bildet.

4. Vorrichtung nach einem der vorhergehenden Ansprüche, **dadurch gekennzeichnet, dass** das bzw. ein jeweiliges Blechteil ein Stanz- / Biegeteil ist.

5. Vorrichtung nach einem der vorhergehenden Ansprüche, **dadurch gekennzeichnet, dass** das bzw. ein jeweiliges Blechteil mit einer Verstärkungsstruktur, insbesondere in Form wenigstens einer Sicke, ausgebildet ist.

6. Vorrichtung nach einem der vorhergehenden Ansprüche, **gekennzeichnet durch** einen der Gehäusekonstruktion (4) zugeordneten Verstärkungsrahmen (25), wobei der Verstärkungsrahmen (25) außerhalb und/oder innerhalb der Gehäusekonstruktion (4) angeordnet oder ausgebildet ist, wobei der Verstärkungsrahmen (25) zumindest abschnittsweise an wenigstens einem zu verstärkenden Blechteil anliegt.

7. Vorrichtung nach Anspruch 6, **dadurch gekennzeichnet, dass** der Verstärkungsrahmen (25) durch einen Abschnitt einer Schaltschrankkonstruktion, in welcher elektrische Komponenten der Vorrichtung (1) angeordnet oder ausgebildet sind, oder ein eine Benutzerarbeitsfläche der Vorrichtung (1) bildendes Plattenelement (24) oder durch ein eine Prozesskammer (12) der Vorrichtung (1) bodenseitig, seitlich oder deckenseitig begrenzendes, insbesondere plattenartiges, Prozesskammerwandungselement gebildet ist.

8. Vorrichtung nach einem der vorhergehenden Ansprüche, **gekennzeichnet durch** einen als gesonderte Baueinheit innerhalb der äußeren Gehäusekonstruktion (4) anordenbaren oder angeordneten Prozessblock (8), wobei an und/oder in dem Prozessblock (8) mehrere Funktionskomponenten der Vorrichtung (1) in einer definierten räumlichen Anordnung und/oder Ausrichtung angeordnet oder ausgebildet sind, wobei der Prozessblock (8) das Bezugssystem für die definierte räumliche Anordnung der an und/oder in diesem angeordneten oder ausgebildeten Funktionskomponenten der Vorrichtung (1) bildet.

9. Vorrichtung nach Anspruch 8, **dadurch gekennzeichnet, dass** der Prozessblock (8) sowie die an oder in diesem angeordneten oder ausgebildeten Funktionskomponenten der Vorrichtung (1) eine vorkonfigurierbare oder vorkonfigurierte, gesondert handhabbare Baugruppe bilden.

10. Vorrichtung nach Anspruch 8 oder 9, **dadurch gekennzeichnet, dass** die an dem Prozessblock (8) angeordneten Funktionskomponenten der Vorrichtung (1) über ein an dem Prozessblock (8) befestigbares oder befestigtes Montagebauteil (17) an dem Prozessblock (8) befestigt sind, wobei die Funktionskomponenten in einer unveränderlichen lagefesten Anordnung und Ausrichtung an dem Montagebauteil (17) befestigt sind und das Montagebauteil (17) in einer unveränderlichen lagefesten Anordnung und Ausrichtung an dem Prozessblock (8) befestigt ist.

11. Vorrichtung nach einem der Ansprüche 8 bis 10, **dadurch gekennzeichnet, dass** der Prozessblock (8) einen Prozessblockgrundkörper (10) umfasst, wobei der Prozessblockgrundkörper (10) die Prozesskammer (12) der Vorrichtung (1) begrenzt.

12. Vorrichtung nach einem der Ansprüche 8 bis 11, **dadurch gekennzeichnet, dass** der Prozessblock (8) einen Prozessblockgrundkörper (10) umfasst, wobei wenigstens ein Bestandteil einer eine Funktionskomponente der Vorrichtung (1) bildenden Belichtungseinrichtung (7), welche zur selektiven Belichtung selektiv zu verfestigender Baumaterialschichten eingerichtet ist, positionsgenau an dem Prozessblockgrundkörper (10) anordenbar oder angeordnet sind.

13. Vorrichtung nach einem der Ansprüche 8 bis 12, **dadurch gekennzeichnet, dass** der Prozessblock (8) einen Prozessblockgrundkörper (10) umfasst, wobei wenigstens ein Bestandteil einer eine Funktionskomponente der Vorrichtung (1) bildenden Beschichtungseinrichtung (5), welche zur Ausbildung von selektiv zu verfestigenden Baumaterialschichten in einer Bauebene (E) der Vorrichtung (1) eingerichtet ist, an dem Prozessblockgrundkörper (10) positionsgenau anordenbar oder angeordnet sind.

14. Vorrichtung nach einem der Ansprüche 8 bis 13, **dadurch gekennzeichnet, dass** der Prozessblock (8) einen Prozessblockgrundkörper (10) umfasst, wobei wenigstens ein Bestandteil einer eine Funktionskomponente der Vorrichtung (1) bildenden Erfassungseinrichtung, welche zur, optischen, Erfassung wenigstens einer, insbesondere einen prozessrelevanten Parameter betreffenden, Erfassungsgröße eingerichtet ist, an dem Prozessblockgrundkörper (10) positionsgenau anordenbar oder angeordnet sind.

15. Vorrichtung nach einem der Ansprüche 8 bis 14, **dadurch gekennzeichnet, dass** der Prozessblock (8) einen Prozessblockgrundkörper (10) umfasst, wobei ein einen Pulveraufnahmeraum (14) begrenzendes Pulvermodul (15) positionsgenau an dem Prozessblockgrundkörper (10) anordenbar oder angeordnet ist.

16. Vorrichtung nach einem der Ansprüche 8 bis 15, **dadurch gekennzeichnet, dass** zwischen dem Prozessblock (8) und der äußeren Gehäusekonstruktion (4) wenigstens ein Schwingungsentkopplungselement (16) zur Schwingungsentkopplung des Prozessblocks (8) von der äußeren Gehäusekonstruktion (4) angeordnet oder ausgebildet ist.

17. Vorrichtung nach einem der Ansprüche 8 bis 16, **gekennzeichnet durch** eine dem Prozessblock (8) zugeordnete Führungseinrichtung, wobei die Führungseinrichtung dazu eingerichtet ist, den Prozessblock (8) in eine Betriebsposition, in welcher der Prozessblock (8) innerhalb der äußeren Gehäusekonstruktion (4) angeordnet ist, und in eine Nichtbetriebsposition, in welcher der Prozessblock (8) außerhalb der äußeren Gehäusekonstruktion (4) angeordnet ist, zu bewegen.

18. Gehäusekonstruktion (4) für eine Vorrichtung (1) zur additiven Herstellung dreidimensionaler Objekte durch sukzessives schichtweises selektives Belichten und damit einhergehendes Verfestigen von Baumaterialschichten aus einem vermittels eines Energiestrahls (6) verfestigbaren Baumaterial (3), wobei innerhalb der Gehäusekonstruktion (4) mehrere Funktionskomponenten der Vorrichtung (1) anordenbar oder ausbildbar sind, **dadurch gekennzeichnet, dass** wenigstens eine Gehäusewandung (4a - 4f) als ein Blechteil ausgebildet ist oder wenigstens ein Blechteil umfasst.
